# EUROPÄISCHE PATENTSCHRIFT

(11) **EP 3 027 922 B1**
(45) Veröffentlichungstag und Bekanntmachung des Hinweises auf die Patenterteilung: **19.04.2017**
(21) Anmeldenummer: 14749710.1
(22) Anmeldetag: 10.07.2014
(51) Int. Cl.: F16D 13/75

(54) **RAMPENRING FÜR EIN RAMPENSYSTEM EINER NACHSTELLEINRICHTUNG SOWIE VERFAHREN ZUR MONTAGE EINER REIBUNGSKUPPLUNG**
RAMP RING FOR A RAMP SYSTEM OF AN ADJUSTING DEVICE, AND METHOD FOR MOUNTING A FRICTION CLUTCH
BAGUE DE RAMPE POUR UN SYSTÈME DE RAMPE D'UN DISPOSITIF D'AJUSTEMENT AINSI QUE PROCÉDÉ SERVANT AU MONTAGE D'UN EMBRAYAGE DE FRICTION

(30) Priorität: 29.07.2013 DE 102013214727
(43) Veröffentlichungstag der Anmeldung: 08.06.2016
(73) Patentinhaber: Schaeffler Technologies AG & Co. KG, 91074 Herzogenaurach (DE)
(72) Erfinder: AHNERT, Gerd, 77880 Sasbach (DE)
(86) Internationale Anmeldenummer: PCT/DE2014/200314
(87) Internationale Veröffentlichungsnummer: WO 2015/014358

(56) Entgegenhaltungen:
- WO-A1-2009/056092
- DE-A1-102009 035 225
- DE-A1-102011 101 560
- DE-A1-102012 203 468

## Beschreibung

Die Erfindung betrifft einen Rampenring für ein Rampensystem einer Nachstelleinrichtung zum Nachstellen eines verschleißbedingten Fehlabstands einer Anpressplatte zu einer Gegenplatte einer Reibungskupplung, wobei der Rampenring relativ zu einer Gegenrampe verdreht werden kann, um einen durch Verschleiß von Reibbelägen der Reibungskupplung erhöhten Hubweg der Anpressplatte zumindest teilweise zu kompensieren, sowie ein Verfahren zur Montage einer Reibungskupplung, die eine Nachstelleinrichtung mit einem derartigen Rampenring aufweist.

Reibungskupplungen können zum Ausgleich eines auftretenden Verschleißes von Reibbelägen mit einer kraftgesteuerten Nachstelleinrichtung versehen sein. Hier wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt ("sensieren") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus DE 10 2009 035 225 A1, WO 2009/056092 A1, DE 10 2012 203 468 A1 und DE 10 2011 101 560 A1 ist jeweils eine Reibungskupplung mit einer weggesteuerten Nachstelleinrichtung bekannt, bei der eine sich in Abhängigkeit vom Abstand eines Betätigungssystems mit einer Tellerfeder und einer Anpressplatte axial verlagernde Antriebsklinke eines Sensierblechs auf ein Ritzel einer Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegenplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Nachstelleinrichtungen mit einem derartigen Betätigungsprinzip werden nachfolgend auch als "TAC-Spindel" bezeichnet. Der Rampenring weist eine Eingriffsöffnung auf, in die ein von der Spindelmutter abstehender Zahn eingreift, so dass bei einem Verdrehen der Spindel und einer axialen Bewegung der Spindelmutter entlang der Spindel der Zahn der Spindelmutter den Rampenring verdrehen kann.

Durch Herstellungstoleranzen kann es vorkommen, dass eine durch das Rampensystem der Nachstelleinrichtung bereitgestellte Nockenhöhe für die Anpressplatte nicht optimal ist, so dass bei der Montage der Reibungskupplung die Spindel der Nachstelleinrichtung in die eine oder andere Richtung verdreht werden kann, um einen toleranzbedingten Fehlabstand des Betätigungselements zur Anpressplatte durch eine Anpassung der Nockenhöhe auszugleichen. Die Spindel ist hierzu entsprechend lang ausgestaltet, um einerseits auch bei ungünstigen Toleranzen einen Höhenausgleich der Nockenhöhe und andererseits eine Nachstellfunktion über den Verschleißbereich der Reibungskupplung zu ermöglichen.

Es besteht ein ständiges Bedürfnis Reibungskupplungen mit Nachstelleinrichtung bei möglichst hohen Drehzahlen leichtgängig und betriebssicher betreiben zu können.

Es ist die Aufgabe der Erfindung Maßnahmen aufzuzeigen, die eine bei hohen Drehzahlen leichtgängig und betriebssicher betreibbare Reibungskupplung mit Nachstelleinrichtung ermöglichen.

Die Lösung der Aufgabe erfolgt erfindungsgemäß durch einen Rampenring mit den Merkmalen des Anspruchs 1 sowie ein Verfahren zur Montage einer Reibungskupplung mit den Merkmalen des Anspruchs 10. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Rampenring für ein Rampensystem einer Nachstelleinrichtung zum Nachstellen eines verschleißbedingten Fehlabstands einer Anpressplatte zu einer Gegenplatte einer Reibungskupplung vorgesehen mit einem von einem Betätigungselement, insbesondere eine als Tellerfeder ausgestaltete Hebelfeder, mit einer Betätigungskraft beaufschlagbaren Ringkörper, einem von dem Ringkörper in axialer Richtung abstehenden ersten Rampenkörper zur abgleitbaren Anlage an eine korrespondierende Gegenrampe, wobei der erste Rampenkörper eine erste Eingriffsöffnung zur Aufnahme eines Zahns einer Spindelmutter der Nachstelleinrichtung aufweist, wobei die erste Eingriffsöffnung eine erste Anlagekante zur Anlage an dem Zahn der Spindelmutter bei einem Verdrehen des ersten Rampenkörpers relativ zur Gegenrampe aufweist, und einem von dem Ringkörper in axialer Richtung abstehenden zweiten Rampenkörper zur abgleitbaren Anlage an eine korrespondierende Gegenrampe, wobei der zweite Rampenkörper eine zweite Eingriffsöffnung zur Aufnahme des Zahns der Spindelmutter der Nachstelleinrichtung aufweist, wobei die zweite Eingriffsöffnung eine zweite Anlagekante zur Anlage an dem Zahn der Spindelmutter bei einem Verdrehen des zweiten Rampenkörpers relativ zur Gegenrampe aufweist, wobei die erste Anlagekante innerhalb des ersten Rampenkörpers im Vergleich zur zweiten Anlagekante innerhalb des zweiten Rampenkörpers versetzt angeordnet ist.

Der Rampenring und die Gegenrampe bilden ein Rampensystem aus, dessen Nockenhöhe durch eine Relativdrehung des Rampenrings zur Gegenrampe verändert werden kann. Dadurch kann ein verschleißbedingter Fehlabstand der Anpressplatte zur Gegenplatte ausgeglichen werden. Ferner kann durch die Veränderung der Nockenhöhe des Rampensystems Herstellungstoleranzen, insbesondere der Anpressplatte und/oder des Nachstellrings, ausgeglichen werden. Durch die mindestens zwei Rampenkörper, die jeweils eine die korrespondierende Anlagekante für den Zahn der Spindelmutter ausbildende Eingriffsöffnung aufweisen, ergeben sich für den Rampenring mindestens zwei verschiedene Winkellagen in Umfangsrichtung, in denen der Zahn der Spindelmutter in den Rampenring eingreifen kann. Wenn der erste Rampenkörper und der zweite Rampenkörper gedanklich hintereinander positioniert werden, weist die erste Anlagekante zur zweiten Anlagekante einen Versatz auf. Dadurch ist bei einem Eingriff des Zahns der Spindelmutter in den ersten Rampenkörper im Vergleich zu einem Eingriff des Zahns der Spindelmutter in den zweiten Rampenkörper der erste Rampenkörper des Rampenrings etwas weiter die Gegenrampe herauf oder herunter gelaufen, wodurch sich bei einer gleichen Relativlage der Spindelmutter zur Gegenrampe eine unterschiedliche Nockenhöhe einstellt, je nachdem in welchen Rampenkörper der Zahn der Spindelmutter eingreift. Dies ermöglicht es bei der Montage der Reibungskupplung einen durch Herstellungstoleranzen bedingten Fehlabstand des Betätigungselements zur Anpressplatte dadurch auszugleichen, dass der Rampenring in einer Winkellage auf die Gegenrampe gesetzt wird, in welcher der Zahn der Spindelmutter in einen hierzu geeigneten Rampenkörper eingreift, ohne dass hierzu die Spindelmutter entlang der Spindel bewegt werden muss. Dadurch kann die Länge der Spindel im Wesentlichen ausschließlich für den beabsichtigten Verschleißbereich der Reibungskupplung ausgelegt werden, wodurch die Spindel entsprechend kürzer ausgestaltet werden kann, wodurch der Bauraumbedarf für die Nachstelleinrichtung reduziert werden kann. Insbesondere ist die Spindel aufgrund der kürzeren Länge einer geringeren Durchbiegung ausgesetzt, so dass die Nachstelleinrichtung auch bei höheren Drehzahlen und höheren Fliehkrafteinfluss immer noch leichgängig ist. Eine Erhöhung der Rampensteigung ist zur Verkürzung der Länge der Spindel nicht erforderlich, so dass erhöhte Nachstellkräfte, welche die Leichtgängigkeit der Nachstelleinrichtung beeinträchtigen würden, nicht in Kauf genommen werden müssen, um die Nachstelleinrichtung auch bei höheren Drehzahlen betreiben zu können. Mit Hilfe der mindestens zwei Rampenkörper kann ein Ausgleich eines durch Herstellungstoleranzen bedingten Fehlabstands des Betätigungselements zur Anpressplatte durch ein Versetzen des Rampenrings in Umfangsrichtung relativ zur Gegenrampe erfolgen ohne hierbei bereits die Nachstelleinrichtung betätigen zu müssen, so dass die mit der Spindelmutter zusammenwirkende Spindel entsprechend kürzer ausgestaltet sein kann und aufgrund der im Betrieb auftretenden geringeren Durchbiegung der Spindel eine auch bei hohen Drehzahlen leichtgängig und betriebssicher betreibbare Reibungskupplung mit Nachstelleinrichtung ermöglicht ist.

Der Rampenring kann vorzugsweise mehrere Rampenkörper aufweisen, die insbesondere auf einem gemeinsamen Durchmesser angeordnet sind und vorzugsweise in Umfangsrichtung gleichmäßig verteilt sind. Eine unbeabsichtigte Schrägstellung des Rampenrings kann dadurch vermieden werden. Ferner kann eine gleichmäßige Kraftverteilung und/oder eine automatische Zentrierung des Rampenrings erreicht werden. Der Rampenring kann zusätzlich zu dem ersten Rampenkörper und dem zweiten Rampenkörper weitere Rampenkörper aufweisen, die mit oder ohne Eingriffsöffnung ausgestaltet sind. Bei entsprechend vielen Rampenkörpern mit Eingriffsöffnung kann für eine gegebene maximale Herstellungstoleranz eine entsprechend feine Einstellung der Nockenhöhe des Rampensystems erfolgen. Der Rampenring kann in abgewickelter Darstellung vergleichbar zu einem Sägezahnprofil ausgestaltet sein, wobei sich die Rampenkörper unmittelbar hintereinander anschließen können und/oder in Umfangsrichtung nachfolgende Rampenkörper über eine Distanz zueinander beabstandet positioniert sein können. Insbesondere weisen die Rampenkörper eine im Wesentlichen gleiche Rampensteigung in Umfangsrichtung auf. Die Rampenkörper können eine an der Gegenrampe abgleitbare Rampenfläche aufweisen. Die Rampenfläche weist eine Erstreckung in Umfangsrichtung auf, die insbesondere mindestens dem maximal vorgesehenen Verdrehwinkel des Rampensystems der Nachstelleinrichtung für den vorgesehenen Verschleißbereich der Reibungskupplung entspricht. Insbesondere weisen die Rampenflächen in einer Seitenansicht der Abwicklung des Rampenrings eine im Wesentlichen gleiche Erstreckung auf. Hierbei ist es möglich, dass ein erste Teilstrecke von einer zweiten Teilstrecke über die Eingriffsöffnung getrennt ist, wobei insbesondere die Summe der Erstreckung in Umfangsrichtung der ersten Teilstrecke und der zweiten Teilstrecke für den ersten Rampenkörper und dem zweiten Rampenkörper im Wesentlich gleich sind. Im Vergleich zu der Erstreckung der Rampenfläche in Umfangsrichtung kann die Erstreckung der Rampenfläche in radialer Richtung kleiner ausgeführt sein. Der Rampenring kann beispielsweise aus einem Blech hergestellt sein, so dass die radiale Erstreckung der Rampenfläche der Blechdicke entsprechen kann. Die Gegenrampe kann insbesondere durch die Anpressplatte oder einen an der Anpressplatte abgestützten Rampenring ausgebildet sein. Die Spindel kann in einem Halter drehbar gelagert sein, wobei der Halter insbesondere mit der Anpressplatte verbunden ist, während eine Antriebsklinke zum Verdrehen der Spindel über ein mit der Spindel drehfest verbundenes Ritzel mit einem Kupplungsdeckel verbunden sein kann. Die Reibungskupplung mit der Nachstelleinrichtung kann insbesondere verwendet werden, um eine Antriebswelle eines Kraftfahrzeugmotors mit mindestens einer Getriebeeingangswelle eines Kraftfahrzeuggetriebes zu kuppeln.

Insbesondere ist bei einem Kontakt der ersten Anlagekante an dem Zahn der Spindelmutter im Vergleich zu einem Kontakt der zweiten Anlagekante an dem Zahn der Spindelmutter eine unterschiedliche Nockenhöhe eingestellt. Bei einem Eingriff des Zahns der Spindelmutter in den ersten Rampenkörper ist im Vergleich zu einem Eingriff des Zahns der Spindelmutter in den zweiten Rampenkörper der erste Rampenkörper des Rampenrings etwas weiter die Gegenrampe herauf oder herunter gelaufen, wodurch sich bei einer gleichen Relativlage der Spindelmutter zur Gegenrampe eine unterschiedliche Nockenhöhe einstellt, je nachdem in welchen Rampenkörper der Zahn der Spindelmutter eingreift.

Vorzugsweise erstrecken sich der erste Rampenkörper von einer in Umfangsrichtung weisenden ersten Rückseite bis zu einem ersten Übergang in den Ringkörper und der zweite Rampenkörper von einer in Umfangsrichtung weisenden zweiten Rückseite bis zu einem zweiten Übergang in den Ringkörper, wobei der Abstand der ersten Anlagekante zu der ersten Rückseite zu dem Abstand der zweiten Anlagekante zu der zweiten Rückseite und/oder der Abstand der ersten Anlagekante zu dem ersten Übergang zu dem Abstand der zweiten Anlagekante zu dem zweiten Übergang verschieden ist. Die Rampenkörper können insbesondere gleichartig ausgestaltet sein, wobei lediglich die Positionierung der Eingriffsöffnung und/oder der Anlagekante innerhalb des Rampenkörpers verschieden sein kann. Insbesondere weisen die Rampenkörper eine im Wesentlichen gleiche Rampensteigung in Umfangsrichtung auf. Über die Rampensteigung ist der unterschiedliche Versatz der Anlagekante zur Rückseite und/oder zum Übergang der verschiedenen Rampenkörper mit einer unterschiedlichen Nockenhöhe des Rampensystems verknüpft. Beispielsweise kann die Eingriffsöffnung durch Stanzen erzeugt werden, wobei für die einzelnen Eingriffsöffnung das selbe Werkzeug verwendet werden kann, wenn das Blech, aus dem der Rampenring gefertigt wird, um eine von der Rampenbreite des Rampenkörpers abweichende Strecke an dem Werkzeug vorbei geführt wird, um für die einzelnen Rampenkörper die Anlagekante unterschiedlich zu positionieren.

Besonders bevorzugt sind mehr als zwei Rampenkörper mit jeweils einer versetzt positionierten Anlagekante vorgesehen, wobei insbesondere bei in Umfangsrichtung nachfolgende Rampenkörpern die Anlagekanten um einen konstanten Versatz D versetzt vorgesehen sind. Durch den konstanten Versatz D kann bei einer gemeinsamen Rampensteigung in Umfangsrichtung die Nockenhöhe um ein konstantes Inkrement verändert werden.

Insbesondere ist mindestens ein Rampenkörper mit einer Markierung versehen. Der markierte Rampenkörper kennzeichnet insbesondere einen Rampenkörper, in den der Zahn der Spindelmutter bei im Wesentlichen fehlenden toleranzbedingten Abweichungen eingreift. Der markierte Rampenkörper definiert dadurch eine Mittelstellung, von der in die eine oder in die andere Richtung in einem gleichen Ausmaß abgewichen werden kann, um eine toleranzbedinge Fehlstellung zu kompensieren.

Vorzugsweise ist die jeweilige Eingriffsöffnung spanabhebend, durch Stanzen oder Tiefziehen hergestellt. Bei der spanabhebenden Bearbeitung kann die Eingriffsöffnung und die Anlagekante sehr genau an einer beliebigen Stelle vorgesehen werden. Beim Stanzen kann beispielsweise mit einem geeigneten Werkzeug in einem einzigen Stanzschritt die Rampenkörper einschließlich der Eingriffsöffnungen ausgestanzt werden, wobei die Eingriffsöffnungen sehr genau an einer beliebigen Stelle vorgesehen werden können. Es ist auch möglich zunächst die Rampenkörper durch Stanzen auszubilden und mit einem gemeinsamen Werkzeug nachfolgend die Eingriffsöffnungen auszustanzen, wobei zum Stanzen der Eingriffsöffnungen eine von der Rampenbreite der Rampenkörper verschiedene Vorschubweite gewählt wird, um den Versatz der Anlagekanten vorzusehen.

Die Erfindung betrifft ferner eine Verwendung eines Rampenrings, der wie vorstehend beschrieben aus- und weitergebildet sein kann, in einem Rampensystem einer Nachstelleinrichtung zum Nachstellen eines verschleißbedingten Fehlabstands einer Anpressplatte zu einer Gegenplatte einer Reibungskupplung. Mit Hilfe der mindestens zwei Rampenkörper kann ein Ausgleich eines durch Herstellungstoleranzen bedingten Fehlabstands des Betätigungselements zur Anpressplatte durch ein Versetzen des Rampenrings in Umfangsrichtung relativ zur Gegenrampe erfolgen ohne hierbei bereits die Nachstelleinrichtung betätigen zu müssen, so dass die mit der Spindelmutter zusammenwirkende Spindel entsprechend kürzer ausgestaltet sein kann und aufgrund der im Betrieb auftretenden geringeren Durchbiegung der Spindel eine auch bei hohen Drehzahlen leichtgängig und betriebssicher betreibbare Reibungskupplung mit Nachstelleinrichtung ermöglicht ist.

Die Erfindung betrifft ferner eine Nachstelleinrichtung zum Nachstellen eines verschleißbedingten Fehlabstands einer Anpressplatte zu einer Gegenplatte einer Reibungskupplung mit einem Rampenring, der wie vorstehend beschrieben aus- und weitergebildet sein kann, zum Abgleiten auf einer Gegenrampe und einer Spindel zum axialen Verlagern einer auf der Spindel aufgeschraubten Spindelmutter zum relativen Verdrehen des Rampenrings in Umfangsrichtung relativ zur Gegenrampe zur Nachstellung eines verschließbedingten Fehlabstands zwischen einer Anpressplatte und einer Gegenplatte der Reibungskupplung durch ein Verdrehen der Spindel, wobei die Spindelmutter einen Zahn zum Eingreifen in die erste Eingriffsöffnung oder in die zweite Eingriffsöffnung des Rampenrings aufweist. Mit Hilfe der mindestens zwei Rampenkörper des Rampenrings der Nachstelleinrichtung kann ein Ausgleich eines durch Herstellungstoleranzen bedingten Fehlabstands des Betätigungselements zur Anpressplatte durch ein Versetzen des Rampenrings in Umfangsrichtung relativ zur Gegenrampe erfolgen ohne hierbei bereits die Nachstelleinrichtung betätigen zu müssen, so dass die Spindel entsprechend kürzer ausgestaltet sein kann und aufgrund der im Betrieb auftretenden geringeren Durchbiegung der Spindel eine auch bei hohen Drehzahlen leichtgängig und betriebssicher betreibbare Reibungskupplung mit Nachstelleinrichtung ermöglicht ist. Die Nachstelleinrichtung kann im Übrigen wie in DE 10 2009 035 225 A1 oder WO 2009/056092 A1 dargestellt ausgestaltet sein, auf deren Inhalt als Teil der Erfindung hiermit Bezug genommen wird.

Die Erfindung betrifft ferner eine Reibungskupplung, insbesondere Doppelkupplung, für ein Kraftfahrzeug, mit einer Gegenplatte, einer relativ zu der Gegenplatte bewegbaren Anpressplatte zum Verpressen einer Kupplungsscheibe zwischen der Gegenplatte und der Anpressplatte, einem Betätigungselement, insbesondere Hebelfeder, zum Bewegen der Anpressplatte entlang einer axialen Betätigungsrichtung und einer zwischen der Anpressplatte und dem Betätigungselement vorgesehenen Nachstelleinrichtung, die wie vorstehend beschrieben ausund weitergebildet sein kann, zum Nachstellen eines verschleißbedingten Fehlabstands der Anpressplatte zur Gegenplatte. Mit Hilfe der mindestens zwei Rampenkörper des Rampenrings der Nachstelleinrichtung kann ein Ausgleich eines durch Herstellungstoleranzen bedingten Fehlabstands des Betätigungselements zur Anpressplatte durch ein Versetzen des Rampenrings in Umfangsrichtung relativ zur Gegenrampe erfolgen ohne hierbei bereits die Nachstelleinrichtung betätigen zu müssen, so dass die Spindel entsprechend kürzer ausgestaltet sein kann und aufgrund der im Betrieb auftretenden geringeren Durchbiegung der Spindel eine auch bei hohen Drehzahlen leichtgängig und betriebssicher betreibbare Reibungskupplung mit Nachstelleinrichtung ermöglicht ist. Insbesondere ist die Gegenrampe für den Rampenring an der Anpressplatte abgestützt oder von der Anpressplatte ausgebildet. Die Reibungskupplung kann im Übrigen wie in DE 10 2009 035 225 A1 oder WO 2009/056092 A1 dargestellt ausgestaltet sein, auf deren Inhalt als Teil der Erfindung hiermit Bezug genommen wird.

Die Erfindung betrifft ferner ein Verfahren zur Montage einer Reibungskupplung, die insbesondere wie vorstehend beschrieben aus- und weitergebildet sein kann, bei dem ein Rampenring, der wie vorstehend beschrieben aus- und weitergebildet sein kann, auf einer Gegenrampe in einer Winkellage in Umfangsrichtung aufgesetzt wird, dass ein Zahn einer Spindelmutter einer Nachstelleinrichtung in die erste Eingriffsöffnung eingreifbar ist, nachfolgend überprüft wird, ob ein hinreichend großer toleranzbedingter Fehlabstand einer mit Hilfe des Rampenrings erreichten Nockenhöhe zur Anpressplatte vorliegt und falls ein hinreichend großer toleranzbedingter Fehlabstand ermittelt wird, der Rampenring zum zumindest teilweisen Ausgleich des toleranzbedingten Fehlabstands relativ zur Gegenrampe verdreht wird bis der Zahn der Spindelmutter in von der vorherigen Eingriffsöffnung verschiedene Eingriffsöffnung eingreifbar ist. Insbesondere kann das Prüfen und gegebenenfalls erforderliche Verdrehen des Rampenrings solange wiederholt werden, bis ein toleranzbedingter Fehlabstand minimal ist. Mit Hilfe der mindestens zwei Rampenkörper des Rampenrings der Nachstelleinrichtung kann ein Ausgleich eines durch Herstellungstoleranzen bedingten Fehlabstands des Betätigungselements zur Anpressplatte durch ein Versetzen des Rampenrings in Umfangsrichtung relativ zur Gegenrampe erfolgen ohne hierbei bereits die Nachstelleinrichtung betätigen zu müssen, so dass die Spindel entsprechend kürzer ausgestaltet sein kann und aufgrund der im Betrieb auftretenden geringeren Durchbiegung der Spindel eine auch bei hohen Drehzahlen leichtgängig und betriebssicher betreibbare Reibungskupplung mit Nachstelleinrichtung ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht eines Teils einer Reibungskupplung mit einer Nachstelleinrichtung,
Fig. 2: eine schematische Schnittansicht der Reibungskupplung aus Fig. 1,
Fig. 3: eine schematische prinzipielle Draufsicht der Nachstelleinrichtung für die Reibungskupplung aus Fig. 2,
Fig. 4: eine schematische Seitenansicht eines Rampenrings der Nachstelleinrichtung aus Fig. 3,
Fig. 5: eine schematische Seitenansicht des Rampenrings aus Fig. 4 in einer ersten Relativlage und
Fig. 6: eine schematische Seitenansicht des Rampenrings aus Fig. 4 in einer zweiten Relativlage.

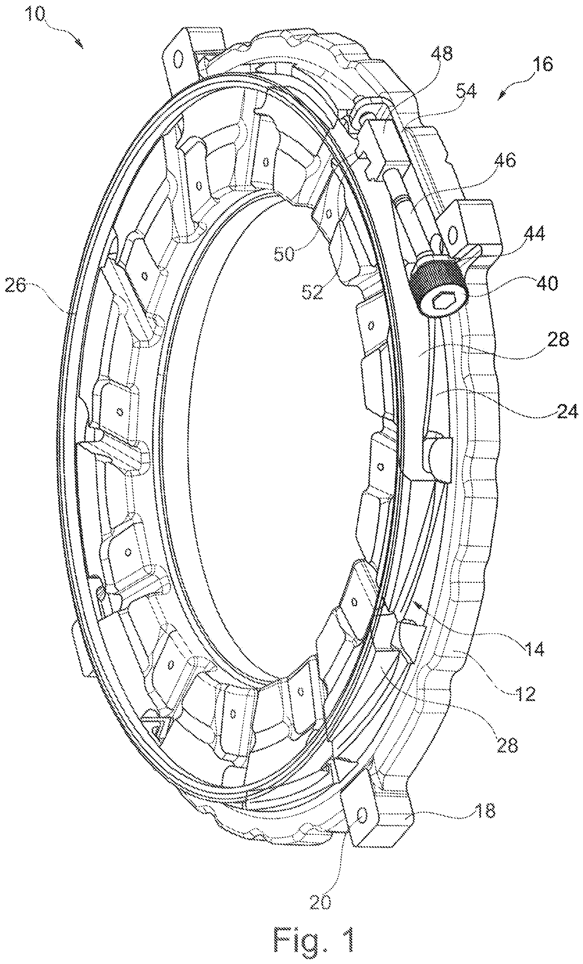

Die in Fig. 1 teilweise dargestellte Reibungskupplung 10 zeigt eine Anpressplatte 12 mit einem Rampensystem 14 und einer Nachstelleinrichtung 16. Die Anpressplatte 12 weist an sich bekannte Elemente zur Aufnahme am Kupplungsgehäuse auf, beispielsweise angeformte und gegebenenfalls nachgearbeitete Aufnahmen 18 mit Öffnungen 20 zur Befestigung von Energiespeichern wie Blattfedern, die eine drehfeste und axial verlagerbare Anbindung an einen Kupplungsdeckel 22 erlauben, wobei im dargestellten Ausführungsbeispiel eine Vorspannung der Energiespeicher insbesondere in der Weise erfolgt, dass die Anpressplatte 12 entgegen der Wirkung der Energiespeicher durch Krafteinwirkung eines Hebelsystems geschlossen wird und nach Abbau der Anpresskraft durch das Hebelsystem durch die entspannende Wirkung der Energiespeicher in die offene Stellung zurückkehrt. An der Anpressplatte 12 sind auf einem vorgegebenen Radius über den Umfang verteilte Gegenrampen 24 eingearbeitet, die bei einer Darstellung der Anpressplatte 12 in einem Schmiedeverfahren im Rohling bereits angeformt und spanabhebend feinbearbeitet sein können. Alternativ kann beispielsweise ein Pressteil oder ein Kunststoffteil auf der Anpressplatte 12 aufgelegt und befestigt sein. Korrespondierend zu den Gegenrampen 24 ist ein Rampenring 26 entsprechenden Durchmessers mit über den Umfang entsprechenden Rampenkörpern 28 auf die Gegenrampen 24 gelegt.

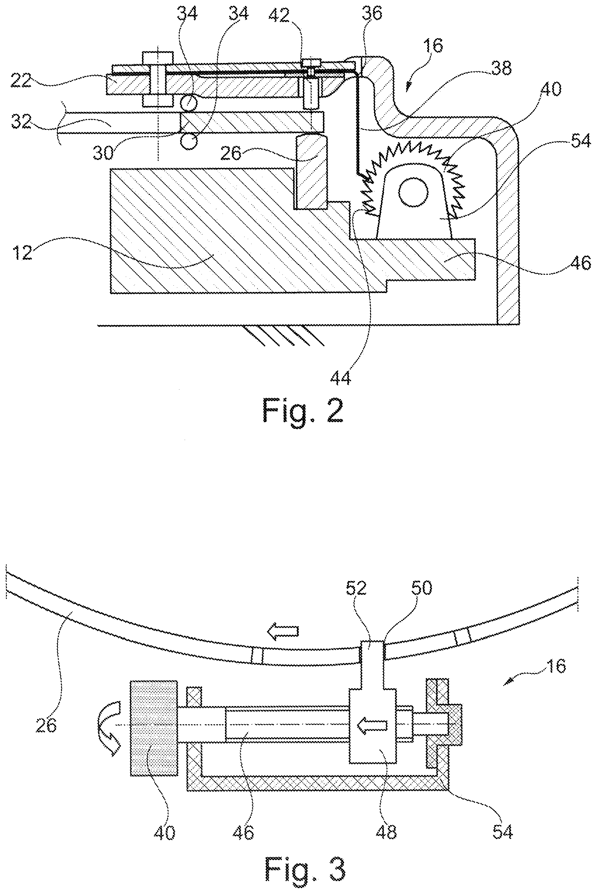

Der in Fig. 2 und Fig. 3 dargestellte Teilschnitt der Reibungskupplung 10 verläuft längs durch deren Drehachse, wobei nur eine Hälfte mit der Nachstelleinrichtung 16 dargestellt ist. Die Reibungskupplung 10 ist aus einem Kupplungsdeckel 22 gebildet, in dem die Anpressplatte 12 mittels in diesem Schnitt nicht ersichtlichen Energiespeichern drehfest und axial verlagerbar aufgenommen ist. Weiterhin ist in dem Kupplungsdeckel 12 eine als Tellerfeder ausgestaltetes Betätigungselement 30 aufgenommen, die radial innen Tellerfederzungen 32 aufweist, die von einem nicht dargestellten Ausrücksystem axial verlagert werden. Das gezeigte Ausführungsbeispiel ist eine gedrückte Reibungskupplung 10, die bei einer Beaufschlagung der Tellerfederzungen 22 durch Drücken ausgerückt wird. Hierzu ist das Betätigungselement 30 mittels zweier als Drahtringe ausgestalteten Kippringe 34 am Kupplungsdeckel 22 verschwenkbar durch nicht dargestellte, beide Kippringe 34 gegeneinander verspannende Nieten unter Ausbildung eines zweiarmigen Hebels abgestützt, wobei der radial äußere Kraftrand die Anpressplatte 12 gegenüber einer nicht dargestellten Gegenplatte unter Verspannung von ebenfalls nicht dargestellten Reibbelägen verspannt. Hierzu ist zwischen der Anpressplatte 12 und dem Betätigungselement 30 der Rampenring 26 verspannt, der mit der Anpressplatte 12 und der Nachstelleinrichtung 16 zusammenarbeitet.

Die Nachstelleinrichtung 16 weist ein Federelement 36 auf, das am radial verlaufenden Deckelteil des Kupplungsdeckels 22 angebracht ist und ein axial abgebogenes Teil, das eine Antriebsklinke 38 bildet, aufweist, die gegen ein Ritzel 40 radial verspannt ist. Ein Anschlag, der das vorgespannte Federelement 36 in Richtung Anpressplatte 12 begrenzt, wird durch einen Bolzen 42 oder Niet gebildet, der das Federelement 36 durchgreift und mittels eines Kopfs einen Axialanschlag für das Federelement 36 bildet. An seinem anderen Ende ist der Bolzen 42 axial begrenzt gegen einen Anschlag verlagerbar im Kupplungsdeckel 22 aufgenommen, so dass bei einem Anschlagen des Betätigungselements 30 an dem Bolzen 42 bei einem großen Ausrückweg der Reibungskupplung 10 der Bolzen 42 axial entgegen der Vorspannkraft des Federelements 36 verlagert wird, wodurch diese mitgenommen wird und eine gegebenenfalls stattfindende Nachstellung beendet wird.

Wenn die Anpressplatte 12 soweit axial verlagert werden muss, dass die Antriebsklinke 38 in einen nachfolgenden Zahnzwischenraum einer Umfangsverzahnung 44 des Ritzels 40 springt, liegt eine Nachstellsituation vor. Bei einem anschließenden Öffnen der Reibungskupplung 10 wird das Ritzel 40 von der Antriebsklinke 38 verdreht, so dass eine mit dem Ritzel 40 drehfest verbundene Spindel 46 verdreht wird. Dadurch wird eine auf der Spindel 46 aufgeschraubte Spindelmutter 48 entlang der Spindel 46 bewegt, die über mindestens einen in eine erste Eingriffsöffnung 50 des Rampenrings 26 eingreifenden Zahn 52 den Rampenring 26 relativ zur Gegenrampe 24 des Rampensystems 14 verdrehen kann, wodurch sich die Nockenhöhe, das heißt die axiale Erstreckung, des Rampensystems 14 ändert, um den verschleißbedingten Fehlabstand der Anpressplatte 12 zur Gegenplatte zu kompensieren und insbesondere einen dem Hubweg im unverschlissenen Neuzustand der Reibungskupplung 10 entsprechenden Hubweg wiederherzustellen. Die Spindel 46 ist in einem Halter 54 drehbar gelagert und mit der Anpressplatte 12 verbunden.

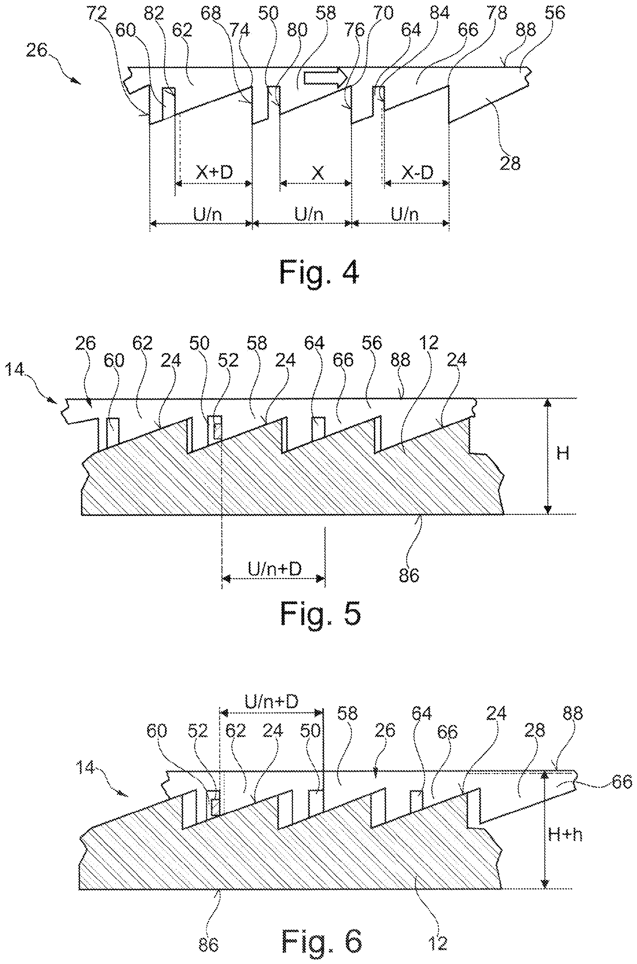

Wie in Fig. 4 dargestellt kann der Rampenring 26 einen umlaufenden Ringkörper 56 aufweisen, von dem mehrere Rampenkörper 28 in axialer Richtung abstehen können. Im dargestellten Ausführungsbeispiel stehen von dem Ringkörper 56 ein die erste Eingriffsöffnung 50 aufweisender erster Rampenkörper 58, ein eine zweite Eingriffsöffnung 60 aufweisender zweiter Rampenkörper 62 und ein eine dritte Eingriffsöffnung 64 aufweisender dritter Rampenkörper 66 ab. Der erste Rampenkörper 58 erstreckt sich von einer ersten Rückseite 68 bis zu einem ersten Übergang 70 zum Ringkörper 56. Entsprechend erstrecken sich der zweite Rampenkörper 62 von einer zweiten Rückseite 72 bis zu einem zweiten Übergang 74 zum Ringkörper 56 und der dritte Rampenkörper 66 von einer dritten Rückseite 76 bis zu einem dritten Übergang 78 zum Ringkörper 56. Die Erstreckung der Rampenkörper 28, 58, 62, 66 in Umfangsrichtung ist im Wesentlichen gleich und beträgt insbesondere bei einem Gesamtumfang U und n Rampenkörpern 28, 58, 62, 66 U/n. Durch die erste Eingriffsöffnung 50 wird in dem ersten Rampenkörper 58 für den Zahn 52 der Spindelmutter 48 eine erste Anlagekante 80 ausgebildet. Entsprechend wird durch die zweite Eingriffsöffnung 60 eine zweite Anlagekante 82 in dem zweiten Rampenkörper 62 und durch die dritte Eingriffsöffnung 64 eine dritte Anlagekante 84 ausgebildet. Beim Vergleich der Rampenkörper 58, 62, 66 sind die Anlagekanten 80, 82, 84 innerhalb des jeweiligen Rampenkörper 58, 62, 66 zu den Anlagekanten 80, 82, 84 der anderen Rampenkörper 58, 62, 66 in Umfangsrichtung versetzt angeordnet. Das heißt, wenn der Abstand der ersten Anlagekante 80 zum ersten Übergang 70 X beträgt, ist der Abstand der zweiten Anlagekante 82 zum zweiten Übergang 74 und/oder der Abstand der dritten Anlagekante 84 zum dritten Übergang 78 um den Betrag D versetzt. Im dargestellten Ausführungsbeispiel beträgt der Abstand der zweiten Anlagekante 82 zum zweiten Übergang 74 X+D und der Abstand der dritten Anlagekante 84 zum dritten Übergang 78 X-D.

Wie in Fig. 5 dargestellt, kann die Nockenhöhe des Rampensystems 14, die im dargestellten Ausführungsbeispiel zwischen einer Reibfläche 86 der Anpressplatte 12 und einer Anlagefläche 88 des Rampenrings 26 für das Betätigungselement 30 gemessen werden kann, H betragen, wenn der Zahn 52 der Spindelmutter 48 in die erste Eingriffsöffnung 50 eingreift. Zum Ausgleich eines durch Herstellungstoleranzen verursachten Fehlabstands des Betätigungselement 30 zur Anpressplatte 12 kann wie in Fig. 6 dargestellt bei der Montage der Reibungskupplung 10 der Rampenring 26 soweit relativ zur von der Anpressplatte 12 ausgebildeten Gegenrampe 24 verdreht sein, dass der Zahn 52 der Spindelmutter 48 nicht in die erste Eingriffsöffnung 50 sondern beispielsweise in die zweite Eingriffsöffnung 60 eingreift. Durch den Versatz der zweiten Anlagekante 52 um D stellt sich für die Nockenhöhe ein Betrag von H+h ein, so dass die Nockenhöhe des Rampensystems 14 um den Betrag h verändert ist ohne hierfür die Nachstelleinrichtung 16 betätigt zu haben und ohne dass für die Nachstellung des Betrags h die Spindelmutter 48 entlang der Spindel 46 verfahren werden musste. Wenn der Zahn 52 der Spindelmutter 48 in die dritte Eingriffsöffnung 64 eingesetzt wird, stellt sich für die Nockenhöhe ein Betrag von H-h ein.

### Bezugszeichenliste

- 10: Reibungskupplung
- 12: Anpressplatte
- 14: Rampensystem
- 16: Nachstelleinrichtung
- 18: Aufnahme
- 20: Öffnung
- 22: Kupplungsdeckel
- 24: Gegenrampe
- 26: Rampenring
- 28: Rampenkörper
- 30: Betätigungselement
- 32: Tellerfederzunge
- 34: Kippring
- 36: Federelement
- 38: Antriebsklinke
- 40: Ritzel
- 42: Bolzen
- 44: Umfangsverzahnung
- 46: Spindel
- 48: Spindelmutter
- 50: erste Eingriffsöffnung
- 52: Zahn
- 54: Halter
- 56: Ringkörper
- 58: erster Rampenkörper
- 60: zweite Eingriffsöffnung
- 62: zweiter Rampenkörper
- 64: dritte Eingriffsöffnung
- 66: dritter Rampenkörper
- 68: erste Rückseite
- 70: erster Übergang
- 72: zweite Rückseite
- 74: zweiter Übergang
- 76: dritte Rückseite
- 78: dritter Übergang
- 80: erste Anlagekante
- 82: zweite Anlagekante
- 84: dritte Anlagekante
- 86: Reibfläche
- 88: Anlagefläche

## Patentansprüche

1. Rampenring für ein Rampensystem (14) einer Nachstelleinrichtung (16) zum Nachstellen eines verschleißbedingten Fehlabstands einer Anpressplatte (12) zu einer Gegenplatte einer Reibungskupplung (10), mit
einem von einem Betätigungselement (30), insbesondere eine als Tellerfeder ausgestaltete Hebelfeder, mit einer Betätigungskraft beaufschlagbaren Ringkörper (56),
einem von dem Ringkörper (56) in axialer Richtung abstehenden ersten Rampenkörper (58) zur abgleitbaren Anlage an eine korrespondierende Gegenrampe (24), wobei der erste Rampenkörper (58) eine erste Eingriffsöffnung (50) zur Aufnahme eines Zahns (52) einer Spindelmutter (48) der Nachstelleinrichtung (16) aufweist, wobei die erste Eingriffsöffnung (50) eine erste Anlagekante (80) zur Anlage an dem Zahn (52) der Spindelmutter (48) bei einem Verdrehen des ersten Rampenkörpers (58) relativ zur Gegenrampe (24) aufweist, und
einem von dem Ringkörper (56) in axialer Richtung abstehenden zweiten Rampenkörper (62) zur abgleitbaren Anlage an eine korrespondierende Gegenrampe (24), wobei der zweite Rampenkörper (62) eine zweite Eingriffsöffnung (60) zur Aufnahme des Zahns (52) der Spindelmutter (48) der Nachstelleinrichtung (16) aufweist, wobei die zweite Eingriffsöffnung (60) eine zweite Anlagekante (82) zur Anlage an dem Zahn (52) der Spindelmutter (48) bei einem Verdrehen des zweiten Rampenkörpers (62) relativ zur Gegenrampe (24) aufweist,
wobei die erste Anlagekante (80) innerhalb des ersten Rampenkörpers (58) im Vergleich zur zweiten Anlagekante (82) innerhalb des zweiten Rampenkörpers (62) versetzt angeordnet ist.

2. Rampenring nach Anspruch 1 **dadurch gekennzeichnet, dass** bei einem Kontakt der ersten Anlagekante (80) an dem Zahn (52) der Spindelmutter (48) im Vergleich zu einem Kontakt der zweiten Anlagekante (82) an dem Zahn (52) der Spindelmutter (48) eine unterschiedliche Nockenhöhe (H) eingestellt ist.

3. Rampenring nach Anspruch 1 oder 2 **dadurch gekennzeichnet, dass** sich der erste Rampenkörper (58) von einer in Umfangsrichtung weisenden ersten Rückseite (68) bis zu einem ersten Übergang (70) in den Ringkörper (56) und der zweite Rampenkörper (62) von einer in Umfangsrichtung weisenden zweiten Rückseite (72) bis zu einem zweiten Übergang (74) in den Ringkörper (56) erstrecken, wobei der Abstand der ersten Anlagekante (80) zu der ersten Rückseite (68) zu dem Abstand der zweiten Anlagekante (82) zu der zweiten Rückseite (72) und/oder der Abstand der ersten Anlagekante (80) zu dem ersten Übergang (70) zu dem Abstand der zweiten Anlagekante (82) zu dem zweiten Übergang (74) verschieden ist.

4. Rampenring nach einem der Ansprüche 1 bis 3 **dadurch gekennzeichnet, dass** mehr als zwei Rampenkörper (58, 62, 66) mit jeweils einer versetzt positionierten Anlagekante (80, 82, 84) vorgesehen sind, wobei insbesondere bei in Umfangsrichtung nachfolgende Rampenkörpern (58, 62, 66) die Anlagekanten (80, 82, 84) um einen konstanten Versatz D versetzt vorgesehen sind.

5. Rampenring nach einem der Ansprüche 1 bis 4 **dadurch gekennzeichnet, dass** mindestens ein Rampenkörper (58, 62, 66) mit einer Markierung versehen ist.

6. Rampenring nach einem der Ansprüche 1 bis 5 **dadurch gekennzeichnet, dass** die jeweilige Eingriffsöffnung (50, 60, 64) spanabhebend, durch Stanzen oder Tiefziehen hergestellt ist.

7. Nachstelleinrichtung zum Nachstellen eines verschleißbedingten Fehlabstands einer Anpressplatte (12) zu einer Gegenplatte einer Reibungskupplung (10) mit einem Rampenring (26) nach einem der Ansprüche 1 bis 6 zum Abgleiten auf einer Gegenrampe (24) und einer Spindel (46) zum axialen Verlagern einer auf der Spindel (46) aufgeschraubten Spindelmutter (48) zum relativen Verdrehen des Rampenrings (26) in Umfangsrichtung relativ zur Gegenrampe (24) zur Nachstellung eines verschließbedingten Fehlabstands zwischen einer Anpressplatte (12) und einer Gegenplatte der Reibungskupplung (10) durch ein Verdrehen der Spindel (46), wobei die Spindelmutter (48) einen Zahn (52) zum Eingreifen in die erste Eingriffsöffnung (50) oder in die zweite Eingriffsöffnung (60) des Rampenrings (26) aufweist.

8. Reibungskupplung, insbesondere Doppelkupplung, für ein Kraftfahrzeug, mit einer Gegenplatte, einer relativ zu der Gegenplatte bewegbaren Anpressplatte (12) zum Verpressen einer Kupplungsscheibe zwischen der Gegenplatte und der Anpressplatte (12), einem Betätigungselement (30), insbesondere Hebelfeder, zum Bewegen der Anpressplatte (12) entlang einer axialen Betätigungsrichtung und einer zwischen der Anpressplatte (12) und dem Betätigungselement (30) vorgesehenen Nachstelleinrichtung (16) nach Anspruch 7 zum Nachstellen eines verschleißbedingten Fehlabstands der Anpressplatte (12) zur Gegenplatte.

9. Reibungskupplung nach Anspruch 8 **dadurch gekennzeichnet, dass** die Gegenrampe (24) für den Rampenring (26) an der Anpressplatte (12) abgestützt ist oder von der Anpressplatte (12) ausgebildet ist.

10. Verfahren zur Montage einer Reibungskupplung (10), nach Anspruch 8 oder 9, bei dem
ein Rampenring (26) nach einem der Ansprüche 1 bis 6 auf einer Gegenrampe (24) in einer Winkellage in Umfangsrichtung aufgesetzt wird, dass ein Zahn (52) einer Spindelmutter (48) einer Nachstelleinrichtung (16) in die erste Eingriffsöffnung (50) eingreifbar ist, nachfolgend überprüft wird, ob ein hinreichend großer toleranzbedingter Fehlabstand einer mit Hilfe des Rampenrings (26) erreichten Nockenhöhe (H) zur Anpressplatte (12) vorliegt und
falls ein hinreichend großer toleranzbedingter Fehlabstand ermittelt wird, der Rampenring (26) zum zumindest teilweisen Ausgleich des toleranzbedingten Fehlabstands relativ zur Gegenrampe (24) verdreht wird bis der Zahn (52) der Spindelmutter (48) in von der vorherigen Eingriffsöffnung (50) verschiedene Eingriffsöffnung (60, 64) eingreifbar ist.

## Claims

1. Ramp ring for a ramp system (14) of an adjusting device (16) for adjusting a wear-induced faulty spacing of a pressure plate (12) from a counterplate of a friction clutch (10), having a ring body (56) which can be loaded with an actuating force by an actuating element (30), in particular a lever spring which is configured as a disc spring, a first ramp body (58) which projects from the ring body (56) in the axial direction for bearing slidably against a corresponding counter-ramp (24), the first ramp body (58) having a first engagement opening (50) for receiving a tooth (52) of a spindle nut (48) of the adjusting device (16), the first engagement opening (50) having a first bearing edge (80) for bearing against the tooth (52) of the spindle nut (48) during a rotation of the first ramp body (58) relative to the counter-ramp (24), and a second ramp body (62) which projects- from the ring body (56) in the axial direction for bearing slidably against a corresponding counter-ramp (24), the second ramp body (62) having a second engagement opening (60) for receiving the tooth (52) of the spindle nut (48) of the adjusting device (16), the second engagement opening (60) having a second bearing edge (82) for bearing against the tooth (52) of the spindle nut (48) during a rotation of the second ramp body (62) relative to the counter-ramp (24), the first bearing edge (80) being arranged within the first ramp body (58) in an offset manner in comparison with the second bearing edge (82) within the second ramp body (62).

2. Ramp ring according to Claim 1, **characterized in that** a different cam height (H) is set in the case of a contact of the first bearing edge (80) against the tooth (52) of the spindle nut (48) in comparison with a contact of the second bearing edge (82) against the tooth (52) of the spindle nut (48).

3. Ramp ring according to Claim 1 or 2, **characterized in that** the first ramp body (58) extends from a first rear side (68) which points in the circumferential direction as far as a first transition (70) into the ring body (56), and the second ramp body (62) extends from a second rear side (72) which points in the circumferential direction as far as a second transition (74) into the ring body (56), the spacing of the first bearing edge (80) from the first rear side (68) being different from the spacing of the second bearing edge (82) from the second rear side (72), and/or the spacing of the first bearing edge (80) from the first transition (70) being different from the spacing of the second bearing edge (82) from the second transition (74).

4. Ramp ring according to one of Claims 1 to 3, **characterized in that** more than two ramp bodies (58, 62, 66) with in each case one bearing edge (80, 82, 84) which is positioned in an offset manner are provided, the bearing edges (80, 82, 84) being provided offset by a constant offset D, in particular, in the case of ramp bodies (58, 62, 66) which follow in the circumferential direction.

5. Ramp ring according to one of Claims 1 to 4, **characterized in that** at least one ramp body (58, 62, 66) is provided with a marking.

6. Ramp ring according to one of Claims 1 to 5, **characterized in that** the respective engagement opening (50, 60, 64) is produced in a material-removing manner, by way of punching or deep-drawing.

7. Adjusting device for adjusting a wear-induced faulty spacing of a pressure plate (12) from a counterplate of a friction clutch (10) having a ramp ring (26) according to one of Claims 1 to 6 for sliding on a counter-ramp (24), and a spindle (46) for axially displacing a spindle nut (48) which is screwed on the spindle (46) for the relative rotation of the ramp ring (26) in the circumferential direction relative to the counter-ramp (24) for adjusting a wear-induced faulty spacing between the pressure plate (12) and a counterplate of the friction clutch (10) by way of a rotation of the spindle (46), the spindle nut (48) having a tooth (52) for engaging into the first engagement opening (50) or into the second engagement opening (60) of the ramp ring (26).

8. Friction clutch, in particular double clutch, for a motor vehicle, having a counterplate, a pressure plate (12) which can be moved relative to the counterplate for pressing a clutch plate between the counterplate and the pressure plate (12), an actuating element (30), in particular lever spring, for moving the pressure plate (12) along an axial actuating direction, and an adjusting device (16) according to Claim 7 which is provided between the pressure plate (12) and the actuating element (30) for adjusting a wear-induced faulty spacing of the pressure plate (12) from the counterplate.

9. Friction clutch according to Claim 8, **characterized in that** the counter-ramp (24) for the ramp ring (26) is supported on the pressure plate (12) or is configured by the pressure plate (12).

10. Method for assembling a friction clutch (10), according to Claim 8 or 9, in which method a ramp ring (26) according to one of Claims 1 to 6 is placed on a counter-ramp (24) in an angular position in the circumferential direction, in that a tooth (52) of a spindle nut (48) of an adjusting device (16) can engage into the first engagement opening (50), a check is subsequently made as to whether a sufficiently large tolerance-induced faulty spacing of a cam height (H) with respect to the pressure plate (12) which is achieved with the aid of the ramp ring (26) is present, and, if a sufficiently large tolerance-induced faulty spacing is determined, the ramp ring (26) is rotated relative to the counter-ramp (24) for at least partial compensation of the tolerance-induced faulty spacing, until the tooth (52) of the spindle nut (48) can engage into an engagement opening (60, 64) which is different from the previous engagement opening (50).

## Revendications

1. Bague de rampe pour un système de rampe (14) d'un dispositif de rattrapage (16) pour rattraper une erreur d'écartement due à l'usure d'un plateau de pressage (12) par rapport à un plateau conjugué d'un embrayage à friction (10), comprenant un corps annulaire (56) pouvant être sollicité avec une force d'actionnement par un élément d'actionnement (30), en particulier un ressort à levier configuré sous forme de ressort Belleville, un premier corps de rampe (58) faisant saillie dans la direction axiale depuis le corps annulaire (56) pour venir s'appliquer de manière à pouvoir glisser contre une rampe conjuguée correspondante (24), le premier corps de rampe (58) présentant une première ouverture d'engagement (50) pour recevoir une dent (52) d'un écrou de broche (48) du dispositif de rattrapage (16), la première ouverture d'engagement (50) présentant une première arête d'appui (80) pour l'appui contre la dent (52) de l'écrou de broche (48) lors d'une rotation du premier corps de rampe (58) par rapport à la rampe conjuguée (24), et
un deuxième corps de rampe (62) faisant saillie dans la direction axiale depuis le corps annulaire (56) pour venir s'appliquer de manière à pouvoir glisser contre une rampe conjuguée correspondante (24), le deuxième corps de rampe (62) présentant une deuxième ouverture d'engagement (60) pour recevoir la dent (52) de l'écrou de broche (48) du dispositif de rattrapage (16), la deuxième ouverture d'engagement (60) présentant une deuxième arête d'appui (82) pour l'appui contre la dent (52) de l'écrou de broche (48) lors d'une rotation du deuxième corps de rampe (62) par rapport à la rampe conjuguée (24),
la première arête d'appui (80) étant disposée à l'intérieur du premier corps de rampe (58) de manière décalée par rapport à la deuxième arête d'appui (82) à l'intérieur du deuxième corps de rampe (62).

2. Bague de rampe selon la revendication 1, **caractérisée en ce qu'**en cas de contact de la première arête d'appui (80) contre la dent (52) de l'écrou de broche (48), par comparaison avec un contact de la deuxième arête d'appui (82) contre la dent (52) de l'écrou de broche (48), une hauteur de came différente (H) est ajustée.

3. Bague de rampe selon la revendication 1 ou 2, **caractérisée en ce que** le premier corps de rampe (58) s'étend depuis un premier côté arrière (68) tourné dans la direction périphérique jusqu'à une première transition (70) dans le corps annulaire (56) et le deuxième corps de rampe (62) s'étend depuis un deuxième côté arrière (72) tourné dans la direction périphérique jusqu'à une deuxième transition (74) dans le corps annulaire (56), la distance de la première arête d'appui (80) au premier côté arrière (68) étant différente de la distance de la deuxième arête d'appui (82) au deuxième côté arrière (72) et/ou la distance de la première arête d'appui (80) à la première transition (70) étant différente de la distance de la deuxième arête d'appui (82) à la deuxième transition (74).

4. Bague de rampe selon l'une quelconque des revendications 1 à 3, **caractérisée en ce que** plus de deux corps de rampe (58, 62, 66) sont prévus avec à chaque fois une arête d'appui positionnée de manière décalée (80, 82, 84), les arêtes d'appui (80, 82, 84) étant prévues de manière décalée avec un décalage constant (D) dans le cas de corps de rampe (58, 62, 66) se suivant dans la direction périphérique.

5. Bague de rampe selon l'une quelconque des revendications 1 à 4, **caractérisée en ce qu'**au moins un corps de rampe (58, 62, 66) est pourvu d'un marquage.

6. Bague de rampe selon l'une quelconque des revendications 1 à 5, **caractérisée en ce que** l'ouverture d'engagement respective (50, 60, 64) est fabriquée par enlèvement de copeaux, par estampage ou par emboutissage profond.

7. Dispositif de rattrapage pour rattraper une erreur d'écartement due à l'usure d'un plateau de pressage (12) par rapport à un plateau conjugué d'un embrayage à friction (10), comprenant une bague de rampe (26) selon l'une quelconque des revendications 1 à 6, prévue pour glisser sur une rampe conjuguée (24) et une broche (46) pour le déplacement axial d'un écrou de broche (48) vissé sur la broche (46) en vue de la rotation relative de la bague de rampe (26) dans la direction périphérique par rapport à la rampe conjuguée (24) pour le rattrapage d'une erreur d'écartement due à l'usure entre un plateau de pressage (12) et un plateau conjugué de l'embrayage à friction (10) par une rotation de la broche (46), l'écrou de broche (48) présentant une dent (52) destinée à s'engager dans la première ouverture d'engagement (50) ou dans la deuxième ouverture d'engagement (60) de la bague de rampe (26).

8. Embrayage à friction, en particulier double embrayage pour un véhicule automobile, comprenant un plateau conjugué, un plateau de pressage (12) pouvant être déplacé par rapport au plateau conjugué pour presser un disque d'embrayage entre le plateau conjugué et le plateau de pressage (12), un élément d'actionnement (30), en particulier un ressort à levier, pour déplacer la plaque de pressage (12) le long d'une direction d'actionnement axiale et un dispositif de rattrapage (16) selon la revendication 7, prévu entre le plateau de pressage (12) et l'élément d'actionnement (30), pour rattraper une erreur d'écartement due à l'usure du plateau de pressage (12) par rapport au plateau conjugué.

9. Embrayage à friction selon la revendication 8, **caractérisé en ce que** la rampe conjuguée (24) pour la bague de rampe (26) est supportée sur le plateau de pressage (12) ou est réalisée par le plateau de pressage (12).

10. Procédé pour le montage d'un embrayage à friction (10) selon la revendication 8 ou 9, dans lequel une bague de rampe (26) selon l'une quelconque des revendications 1 à 6 est posée sur une rampe conjuguée (24) dans une position angulaire dans la direction périphérique, qu'une dent (52) d'un écrou de broche (48) d'un dispositif de rattrapage (16) peut venir en prise dans la première ouverture d'engagement (50), ensuite on vérifie s'il existe une erreur d'écartement suffisamment grande due aux tolérances d'une hauteur de came (H) obtenue à l'aide de la bague de rampe (26) par rapport au plateau de pressage (12) et
si l'on détermine qu'il existe une erreur d'écartement suffisamment grande due aux tolérances, la bague de rampe (26) est tournée par rapport à la rampe conjuguée (24) pour compenser au moins en partie l'erreur d'écartement due aux tolérances jusqu'à ce que la dent (52) de l'écrou de broche (48) puisse venir en prise dans l'ouverture d'engagement (60, 64) différente de la précédente ouverture d'engagement (50).
